# EUROPEAN PATENT SPECIFICATION

(11) **EP 1 354 684 B1**
(45) Date of publication and mention of the grant of the patent: **29.10.2003**
(21) Application number: 02447077.5
(22) Date of filing: 30.04.2002
(51) Int. Cl.: B29C 44/44, B29C 44/42, B29C 31/04, B29C 44/04

(54) **Method and installation for producing a moulded bonded foam article**
Verfahren und Vorrichtung zur Herstellung eines Artikels aus geformtem und gebundenem Schaum
Procédé et installation de production d'articles en mousse moulée et agglomérée

(43) Date of publication of application: 22.10.2003
(73) Proprietor: RECTICEL, 1200 Brussels (BE)
(72) Inventor: Kamprath, Axel, 9230 Wetteren (BE); Allaerts, Wim, 9230 Wetteren (BE)
(74) Representative: Van Reet, Joseph

(56) References cited:
- EP-A- 0 894 885
- WO-A-01/89793
- PATENT ABSTRACTS OF JAPAN vol. 2000, no. 12, 3 January 2001 (2001-01-03) & JP 2000 246743 A (TACHI S CO LTD), 12 September 2000 (2000-09-12)

## Description

The present invention relates to a method for producing a moulded bonded foam article comprising the steps of providing particles, including foam particles, for producing the moulded bonded foam article, applying a binder onto the particles to achieve a mixture, introducing an amount of said mixture into a cavity of a mould, through at least one inlet opening in this mould, while generating a flow of gas through the mould cavity, allowing said binder to set with the particles in a compressed state to form the moulded bonded foam article, and demoulding the produced moulded bonded foam article.

US-A-3 354 578 discloses a method wherein polyurethane foam scrap is chopped into small particles. These particles are subsequently mixed with an adhesive and the achieved mixture is blown in a mould. The mixture is kept in the mould until the adhesive is set. After having removed the moulded article from the mould, a cover is applied around this article so that the moulded bonded foam is kept compressed within the cover. Subsequently it is assembled with other moulded bonded foam parts to achieve a figure toy. Since the foam flocks or particles are blown into the mould cavity, the mould cavity must be provided with gas outlet openings to enable the transport air to escape from the mould cavity.

A disadvantage of the method disclosed in US-A-3 354 578 is that no measures are provided to control the density distribution of the mixture blown in the mould cavity. In the case of a figure toy, a uniform density should normally be obtained. With the method disclosed in US-A-3 354 578, a rather uniform density can be achieved when the mould is a simple and relatively small mould comprising only a main mould cavity but for more complex mould cavities, for example when the body and the arms and legs of the figure toy would be moulded in one mould, a uniform foam density cannot always be achieved.

A method wherein a mixture of foam particles and binder is blown in a closed mould to produce a moulded bonded foam article is also disclosed in JP-A-2000 246 743 and in EP-B-0 657 266. In the method disclosed in EP-B-0 657 266 the mixture of particles and binder is blown through a feed pipe ending via a relatively small inlet opening provided in a side wall of the mould in the mould cavity so that the particles are blown substantially horizontally in this mould cavity. In order to enable the transport air to escape, the walls of the mould are provided with a number of small outlet openings. After having blown the mixture into the mould cavity the volume of this mould cavity is reduced by means of moveable wall portions so that the mixture of particles and binder is compressed in the mould cavity. In a next step, the binder is cured by blowing steam through the compressed mixture.

The object of the method disclosed in EP-B-0 657 266 Is to produce moulded bonded foam parts having a uniform density. In order to achieve such a uniform foam density the particles are blown in such a manner through the inlet opening in the mould cavity that they are carried by the air flow into the mould until the mould cavity is entirely filled whilst avoiding any further compression of the deformable foam flocks. A drawback of this known method is however that, especially in more complex mould cavities, the desired uniform foam density can not always be achieved by simply blowing the foam particles through a relatively small inlet opening provided in a side wall into the mould cavity. In the example illustrated in the figures of EP-B-0 657 266, when initially filling the mould, the air and foam particles will for example not simply flow in one main direction through the mould cavity but a circulation of air will normally be created therein. Indeed, the foam particles and air are blown centrally through one of the end walls into the mould cavity towards the opposite end wall where the stream of air and foam particles will be deflected to a large extend to return along the side walls towards the end wall through which they are injected. Due to the presence of this circulation, the mould cavity is not filled uniformly from the back to the front, the foam particles being initially blown away by the air current from the opposite end wall rather than being deposited thereon. Subsequently, when the mould is nearly filled, the flow of air and particles into the mould cavity will urge the foam particles mainly towards the opposite end wall so that a greater force will be exerted on the mixture in this direction resulting in an undesired density gradient. When smaller side cavities ending in the main cavity are provided in the mould it will further be difficult to provide a sufficient amount of foam particles in these side cavities, especially when they are provided in the top wall of the mould. In general, it is indeed more difficult to fill the top side than the bottom side of the mould. To achieve the desired uniform density it will therefore for example be necessary to provide an additional mechanical compression of the foam particles in the side cavities and/or in the top part of the mould.

In view of the above described problems, an object of the present invention is to propose a new method for producing a moulded bonded foam article which enables a better control of the density distribution of the mixture in the mould cavity, especially in the case of more complex mould cavities, and which also enables to achieve a density gradient, when desired, without having necessarily to perform a mechanical compression once the mixture is introduced in the mould cavity.

In accordance with the invention, the flow of gas through the mould cavity is controlled when introducing the mixture in the mould cavity to reach for a predetermined period of time a minimum flow rate, expressed in normal m³ of gas per minute, of at least 500 times, preferably at least 1000 times and most preferably at least 2000 times the inner volume V, expressed in m³, which the mould cavity has when the inlet opening is closed in order to compress the mixture so that it is in a first compressed state upon closing the inlet opening.

When using such high flow rates the mould may be provided first of all with a relatively large inlet opening since the mixture introduced in the mould cavity can be compressed sufficiently therein by the flow of gas, even when the mould has a large inlet opening. An advantage of the presence of such a large inlet opening is that uncontrolled air circulations within the mould cavity are easier to avoid so that the foam particles can be deposited directly onto the inner surface of the mould or onto one another without first swirling around in the mould cavity. A further advantage is that such a large inlet opening enables a better control of where the particles are introduced and deposited in the mould cavity. The high flow rates generated in accordance with the first aspect of the invention moreover enable to split the flow of gas over a larger surface area, in particular over different zones where the gas flows out of the mould cavity, whilst still maintaining a sufficient flow of gas in each zone to keep the mixture in all of these zones compressed against the wall of the mould cavity. In this way, the mixture can not only be guided to different areas in the mould cavity but the densification of the mixture can be controlled in the different zones of the mould cavity to provide that amount of particles in the different mould areas required to achieve the desired density distribution within the moulded bonded foam article. The amounts of particles can in particular be controlled to achieve a uniform density but the method according to the invention enables also to produce bonded foam parts with a desired density gradient, for example parts showing more dense or more rigid projecting edges. In the prior art methods, wherein a flow of air is used to blow the foam particles into the mould cavity, much lower flow rates are used since only a small flow rate is required to blow the mixture through the relatively small transport pipe and inlet opening in the mould cavity, even when the mould cavity is nearly filled.

In an advantageous embodiment of the method according to the invention, use is made of a mould, the inlet opening of which has, measured according to a flat plane parallel to the inlet opening, a predetermined surface area and the mould cavity of which has, measured parallel to said flat plane, a cross-sectional surface area comprised between a minimum and a maximum value, the predetermined surface area of the inlet opening being at least equal to 30%, preferably to 45% and more preferably to 60% of said maximum cross-sectional surface area.

As explained already hereabove, the use of a large inlet opening offers two main advantages. First of all it enables a better control, in particular a mechanical control, of where the particles are deposited in the mould cavity. Secondly, uncontrolled air circulations are easier to avoid by allowing the air or gas to enter the mould cavity in one main stream over the entire surface of the inlet opening. Due to the relatively large size of this opening compared to the mould cavity, there is not much space left aside the main gas flow into the mould cavity to allow a circulation of gas within the mould cavity. Compared to other existing methods for producing a moulded bonded foam article in an open mould, the method according to this second aspect of the invention enables a better control of the amount of particles in the different mould areas due to the fact that the particles introduced in the mould are not piled loosely onto one another but are compressed by the flow of gas. Due to the densification of the particles, the required amount of particles can be provided more easily in the different areas. In certain areas, where more particles are required, it is even possible to densify them to a larger extend. When the loose mixture of particles and binder has an apparent density of d kg/m³, the gas flow is for example controlled in a preferred embodiment of the invention that this mixture has, in said first compressed state, i.e. when the mould is closed, an average density of at least 1.5 x d kg/m³ and preferably of at least 2.0 x d kg/m³.

In a further advantageous embodiment of the method according to the invention, use is made of a mould, the inlet opening of which has, measured according to a flat plane parallel to the inlet opening, a predetermined surface area, the mixture being introduced into the mould cavity in at least one stream having, measured also according to said flat plane, a cross-sectional surface area which is smaller than said predetermined surface area of the inlet opening. When introducing the mixture in the mould cavity, the flow of gas through the mould cavity is directed to enter this mould cavity at least partially through the area of the inlet opening next to the stream of mixture and is controlled to compress the mixture in the mould cavity so that it is in a first compressed state upon dosing the inlet opening.

Since the stream of mixture into the mould cavity occupies in this embodiment only a portion of the inlet opening, it is possible to guide the mixture mechanically to certain areas in the mould cavity in order to provide the necessary amount of particles in these areas. By the compression of the mixture in the mould cavity by means of the flow of gas through the inlet opening, this inlet opening cannot only be made larger than the stream of the mixture entering the mould cavity but the mixture is moreover kept compressed against the inner surface of the mould cavity so that the required amount of mixture can be deposited in the different areas of the mould cavity.

In a preferred embodiment of the method according to the invention, when the mixture has been introduced into the mould cavity, the generation of the flow of gas through the mould cavity is continued substantially until the inlet opening is closed, the flow of gas through the mould cavity being controlled both when introducing the mixture in the mould cavity and after having introduced the mixture therein so that the mixture is compressed by the flow of gas and is in a first compressed state upon closing the inlet opening.

An advantage of continuing the flow of gas through the mould cavity until the inlet opening is substantially closed is that a larger inlet opening can be provided in the mould without requiring a stronger compression of the mixture when introducing it in the mould cavity. By the continued flow of gas, the mixture is indeed prevented from expanding again when the inlet opening is being closed.

In an advantageous embodiment of the method according to the invention the flow of gas through the mould cavity, when introducing the mixture therein, is at least partially generated by sucking gas out of the mould cavity, in particular at least 70%, preferably at least 90% and most preferably substantially 100% of said gas flow being sucked out of the mould cavity.

By sucking at least a portion of the gas flowing through the mould cavity out of this cavity the mixture introduced in the mould cavity can be guided to and maintained more easily in a compressed state in the desired areas on the inner mould surface. Moreover, it is also easier to avoid uncontrolled circulating air flows within the mould cavity when sucking the air out of the mould cavity instead of blowing the air under pressure into the mould cavity. Sucking foam particles instead of blowing them in a mould is already known per se from DE-C-38 21 410. In this known method, expandable polystyrene particles are sucked in a mould and are expanded and bonded therein by means of steam. An essential difference with the method according to the present invention is that no binder has to be used in this known method and that the particles are not expanded yet when introducing them in the mould. In this way the particles are much easier to introduce in the mould and have in particular not to be compressed. DE-C-38 21 410 even explicitly teaches to avoid any compression of the particles when introducing them in the mould in order to be able to obtain a uniform density.

In the method according to the invention use is preferably made of a mould, the mould cavity of which is delimited, when introducing the mixture therein, by walls which show said inlet opening for the mixture and which are further provided with gas in- and/or outlet apertures for generating said flow of gas through the mould cavity, the gas in- and/or outlet apertures and said inlet opening being arranged in at least three different zones wherein the flow of gas is controlled through said apertures and/or said inlet opening when introducing the mixture in the mould cavity. The flow of gas can be controlled in particular by determining the number and the size of the apertures in the different zones or, when using a suction unit, by controlling the amount of gas sucked out of the mould cavity in the respective zones. By controlling the flow of gas in the different zones, a predetermined density distribution, which will normally be different from a uniform density, can be achieved after having introduced the mixture in the mould. Once the mould cavity is closed, another flow of gas can then be generated through the mould cavity, in particular in a direction opposite to the direction of the first flow of gas, in order to obtain the desired final density distribution.

The invention also relates to an installation for producing moulded bonded foam articles starting from particles, including foam particles. This installation comprises a device for applying a binder onto the particles to produce a mixture of particles and binder, a mould showing a mould cavity having an inlet opening and being arranged to mould said articles therein, means for introducing an amount of said mixture through said inlet opening into the mould cavity, means for generating a flow of gas through the mould cavity when the mixture is being introduced therein, and means for closing the inlet opening when the mixture has been introduced in the mould cavity.

According to the invention, the installation is characterised in that said gas flow generating means are arranged to generate a flow of gas through the mould cavity reaching for a predetermined period of time when the mixture is being introduced in the mould cavity a minimum flow rate, expressed in normal m³ of gas per minute, of at least 500 times, preferably at least 1000 times and most preferably at least 2000 times the inner volume V, expressed in m³, which the mould cavity has when the inlet opening is closed.

According to an advantageous embodiment of the invention, the installation is characterised in that the inlet opening in the mould cavity has, measured according to a flat plane parallel to the inlet opening, a predetermined surface area and the mould cavity has, measured parallel to said flat plane, a cross-sectional surface area comprised between a minimum and a maximum value, the predetermined surface area of the inlet opening being at least equal to 30%, preferably to 45% and more preferably to 60% of said maximum cross-sectional area.

Other particularities and advantages of the invention will become apparent from the following description of some particular embodiments of the method and installation for producing a moulded bonded foam article according to the invention. This description is only given by way of illustrative example and is not intended to limit the scope of the invention. The reference numerals used in this description relate to the annexed drawings wherein:
Figure 1 shows a perspective view of a moulded bonded foam article, in particular a head rest, produced by a method according to the present invention;
Figure 2 shows schematically, in cross-section according to lines II-II in Figure 3, a front elevational view of a mould for producing the article illustrated in Figure 1;
Figure 3 shows schematically, in cross-section according to lines III-III in Figure 2, a side elevational view of the mould illustrated in Figure 2;
Figures 4 to 7 are views similar to Figure 3 illustrating the different steps of the method according to the invention for producing the moulded bonded foam article illustrated in Figure 1;
Figure 8 is a schematic diagram of the blower unit and the ducts and valves connecting this blower unit to the mould illustrated in the previous figures to generate the required flow of gas through this mould when producing the moulded bonded foam article therein; and
Figure 9 is a diagrammatic view of the installation comprising the mould illustrated in the previous figures and the devices for mixing the foam particles with a binder and for introducing the mixture in the mould cavity.

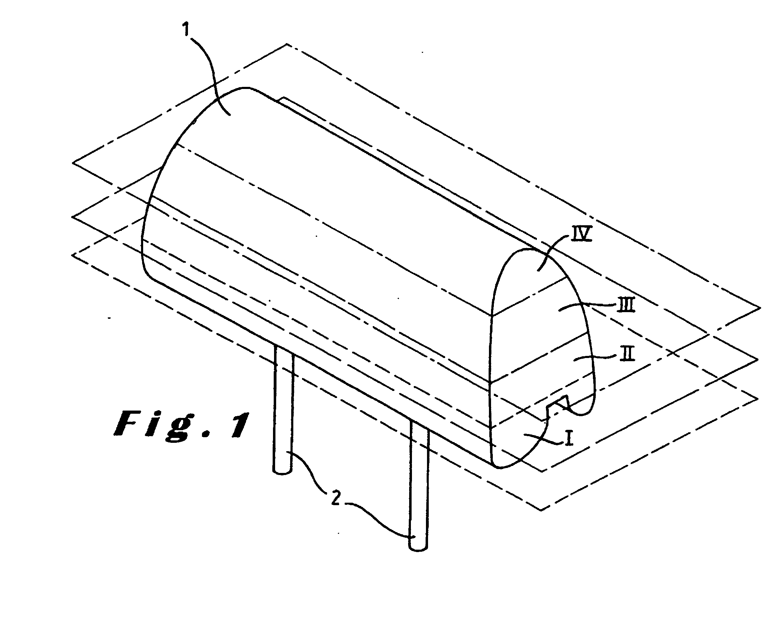

The moulded bonded foam article illustrated in Figure 1 is a head rest for a car seat comprising a moulded bonded foam part 1 and a metal insert 2 for fixing it to the car seat. The method according to the present invention can however be used for producing different types of moulded bonded foam articles showing different shapes and having different hardnesses and/or densities. It can be used for example to make cushions for seats, pieces for insulating or packaging various articles, more rigid supporting pieces, etc.

The moulded bonded foam articles are usually made of waste foam, in particular trim foam produced as waste when cutting shapes out of larger foam pieces. The foam may in particular be different kinds of polyurethane foam including flexible, semi-flexible and rigid foams, open and closed cell foams, reticulated foams, etc. but also other non-polyurethane foam types can be used. The foam pieces are comminuted to particles of the desired size either by grinding or shredding or by cutting them as disclosed in EP-B-0 679 168. The achieved particles have usually for more than 80 vol. %, preferably for more than 90 vol. %, a volume of between 0.15 and 25 cm³, and preferably of between 0.5 and 5 cm³ . In addition to the foam particles or flocks, other particles can be used to produce the moulded bonded foam, for example solid plastic, rubber, wood or cork particles.

In a preferred embodiment of the method according to the invention, the foam particles used to make the bonded foam article comprise flexible foam particles having in particular a compression hardness, measured in accordance with the standard DIN 53577, smaller than 15 kPa, and more particularly smaller than 10 kPa. These flexible foam particles constitute preferably at least 30 vol. %, and more particularly at least 50 vol. % of the particles used to make the bonded foam. These particles further comprise preferably at least 50 vol. %, and more preferably at least 75 vol. %, of open-cell foam particles having an open cell content of at least 50%. The presence of such flexible, preferably open-cell foam particles has not only an effect on the hardness of the produced moulded bonded foam but determines also the overall or apparent compressibility of the loose particles. The presence of open-cell foam particles increases further the air permeability of the loose flocks in the mould and therefore the flow rate of gas which can be achieved through the mould cavity and the resulting compression of the mixture introduced therein as will be described further hereinafter.

In order to be able to produce the bonded foam the particles are first mixed with a binder. This binder is for example an elastomeric rubber-based binder or a polyurethane glue, in particular a polyurethane prepolymer having free NCO groups which can be cured in the presence of moisture, in particular in the presence of steam. Usually such prepolymers have a free NCO content of 5 to 25 %, and more particularly between 5 and 15 %. The polyurethane prepolymer is preferably a prepolymer made with TDI and/or MDI and conventional polyether polyols used for the production of soft polyurethane foams. The amount of binder applied onto the particles comprises preferably 3 to 20 %, and more preferably 5 to 15 %, of the total weight of the particles. The binder can for example be sprayed onto the particles whilst stirring them.

After having applied the binder onto the particles, an amount of the mixture of particles and binder is introduced through an inlet opening into the cavity of a mould wherein the mixture of particles and binder is compressed. The inlet opening is subsequently closed off and the binder is allowed to cure or set with the mixture in a compressed state to form the moulded bonded foam article. To increase the curing speed, steam can be injected into the mould.

A problem when producing moulded bonded foam articles is that the produced articles should have a predetermined density distribution. The produced articles should for example have a uniform density so that the bonded foam has a uniform hardness and does in particular not show hard or soft areas. Such problems especially arise when the mould cavity shows narrower side cavities wherein the foam density will usually be lower. In other cases more rigid zone's may be required in the moulded bonded foam articles, for example in projecting or upstanding edges thereof. Since such projecting parts are produced in recesses in the mould surface, it is clear that providing the required higher amounts of particles in such recesses involves extra problems.

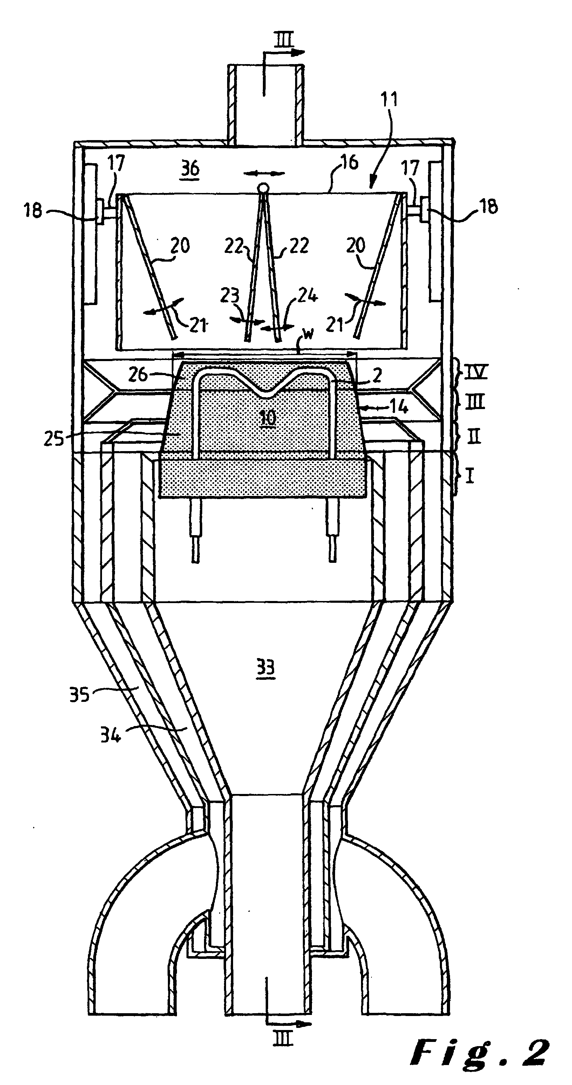

Figures 2 to 9 illustrate a particular embodiment of an installation and a method according to the invention which enables a better control of the density distribution in the mould cavity and hence in the moulded bonded foam article.

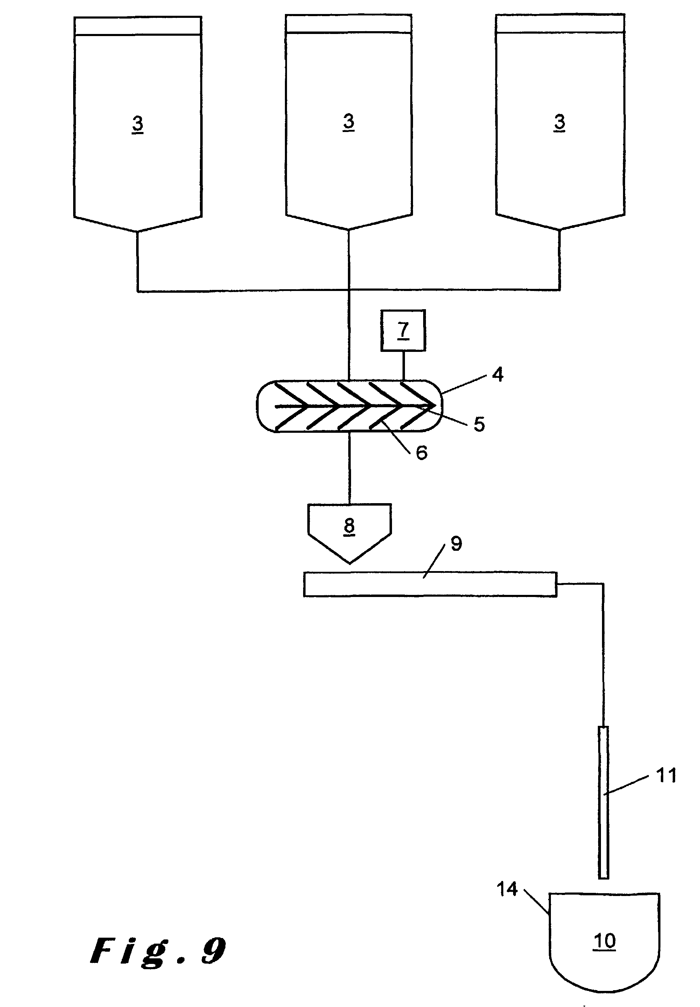

In the overall view of Figure 9, the installation comprises a number of storage silo's 3 with different types of particles, in particular with foam particles or foam flocks of different sizes, densities or hardnesses, or with other types of particles such as for example rubber, cork and/or plastic particles. The required amount of the different types of particles is introduced in a mixer or blender 4 showing for example a central rotating shaft 5 provided with mixing paddles 6. When the particles are being mixed the binder is sprayed onto the particles by means of a binder spraying device 7. When a thoroughly mixed mixture is achieved, the required amount of this mixture is transferred via a hopper 8 with a feeding device 9 to the mould cavity 10. To enable a mechanical distribution of the particles in the mould cavity 10, an adapter 11 is further arranged between the feeding device 9 and the mould cavity 10.

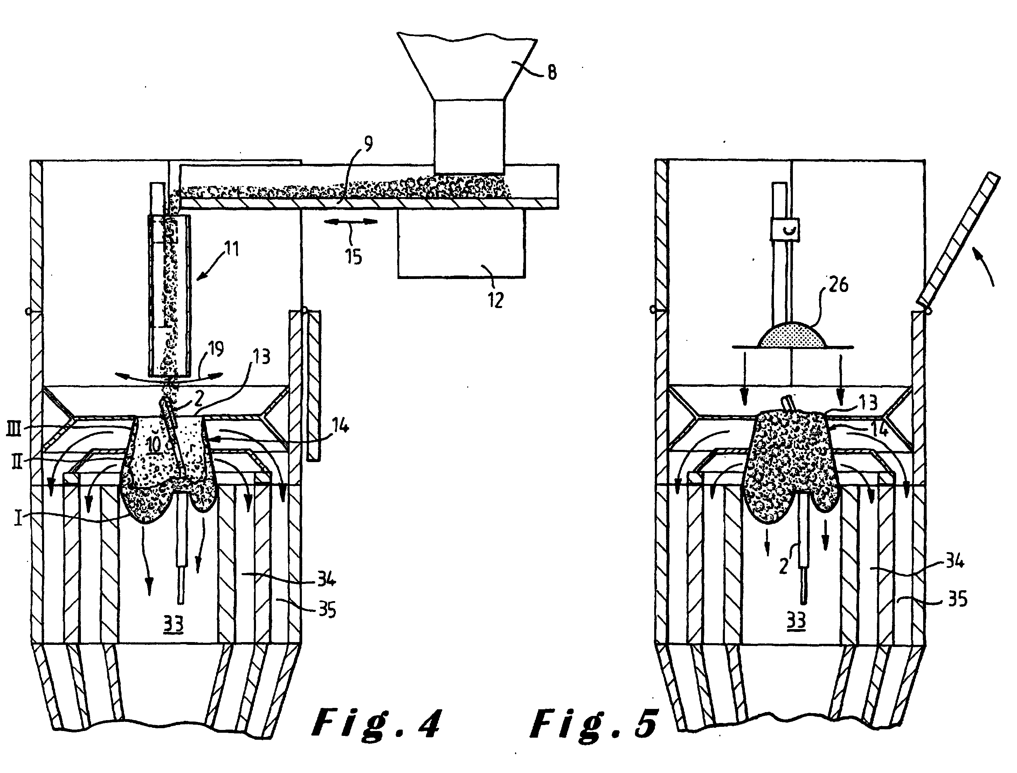

In Figure 4 some further details of a preferred hopper 8 with feeding device 9 are illustrated. The mixture introduced in the hopper 8 is deposited onto a vibrating gutter 9 as the feeding device. This vibrating gutter 9 comprises a vibrator 12 which is fixed underneath the gutter and which makes the gutter vibrate at such a frequency that the particles are moved forwards notwithstanding the fact that the gutter itself is substantially horizontal. The free end of the vibrating gutter 9 is positioned above the inlet opening 13 of the mould 14 wherein the moulded bonded foam article is to be produced. An advantage of the use of a vibrating gutter 9 with a flat bottom is that by the vibrations the particles are not only transported towards the end situated above the mould 14 but they are also quite uniformly distributed in the transverse direction of the gutter 9. Consequently, the particles can be divided homogeneously over the width w of the inlet opening 13, at least when the gutter 9 has a width which is at least equal to the width w of this inlet opening. The hopper 8 with vibrating gutter 9 may be movable in a direction perpendicular to the width of the inlet opening 13, more particularly in a direction indicated by the double arrow 15 in order to distribute the mixture also in this direction over the length I of the inlet opening 13.

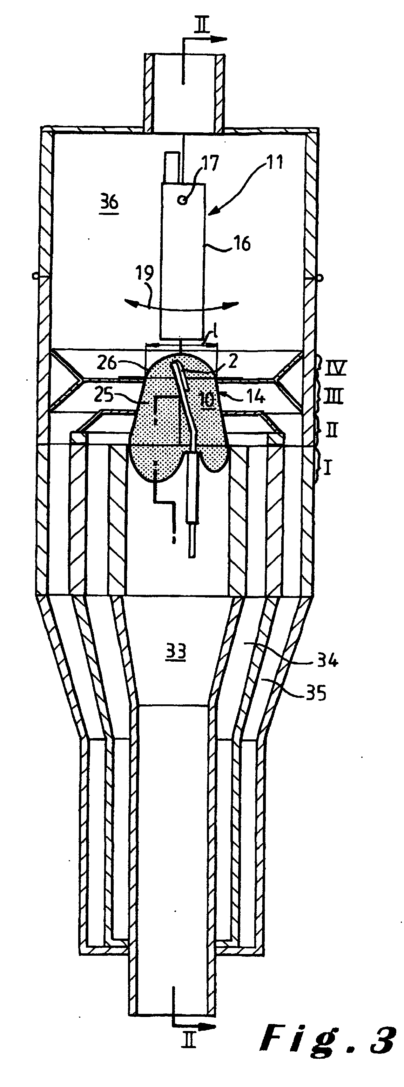

In the embodiment illustrated in the drawings, such a movement is however not required to be able to distribute the mixture over the length I of the inlet opening 13 due to the adapter 11 which is provided between the vibrating gutter 9 and the inlet opening 13. As illustrated in Figures 2 and 3, this adapter 11 comprises a rectangular tubular part 16 provided with two outwardly projecting support axes 17 by means of which it is suspended in supports 18 so that it can swivel according the double arrow 19 to guide the mixture through the inlet opening 13 into the mould cavity 10. In the embodiment illustrated in the drawings this has to be done manually but it is of course possible to provide an automatic, for example a pneumatic or electric, control system.

In order to be able to modify also the stream of the particles over the width w of the inlet opening 13 side flaps 20 are first of all provided within the adapter 11 which can hinge according to the double arrows 21 to adjust the width of the stream to the width w of the inlet opening 13. When more particles have to be guided to certain areas in the mould cavity, further hinging flaps 22 can be provided within the tubular adapter part 16. The different flaps can be fixed in a particular longitudinal or angular position (according to arrows 21, 23 and 24 respectively) or it is also possible to provide an automatic, for example a pneumatic or electric control mechanism which enables to modify the position of the flaps when filling the mould cavity 10.

In order to be able to generate a flow of gas through the mould cavity 10, this mould cavity is delimited in the mould illustrated in the drawings, on the one hand, by perforated walls 25 forming a lower mould part and, on the other hand, by a perforated lid 26 forming a removable upper mould part which closes the inlet opening 13 in the lower mould part. The perforations in the walls 25 form gas in and/or outlet apertures through which the required flow of gas can be generated through the mould cavity 10 when introducing the mixture therein, more particularly a flow of gas compressing the mixture into the mould cavity. For generating this flow of gas the installation comprises a gas pumping unit 27, in particular a blower which is not designed to produce a high vacuum or pressure such as a vacuum pump but which is on the contrary designed to generate a relatively high flow rate. The blower as such enables for example to generate a flow rate higher than 5 m³/min, preferably higher than 10 m³/min, whilst generating a pressure difference of 100 mbar, the blower being able to generate for example a pressure difference of upto 500 mbar.

The perforations in the walls 25 of the mould cavity 10 may be of various shapes and may in particular be circular, square, rectangular, oblong, crossshaped, etc. The size of the perforations is preferably small enough to withhold rigid spheres having a diameter larger than 3 mm, preferably larger than 2 mm and more preferably larger than 1 mm. The walls 25, and thus the perforations therein, may be covered with an air-permeable sheet, for example with a woven or preferably with a non-woven sheet material which will stick to the moulded bonded foam article. The advantage of the use of such cover materials is that the foam particles are prevented from passing through the perforations when they are too large and that the sheet material, which adheres to the surface of the moulded bonded foam article by the binder used to make the moulded bonded foam, may improve the surface properties of at least part of the surface of the moulded bonded foam article and may also make it easier to pull for example a textile or other cover over the article. Instead of being perforated, the walls of the mould cavity may also be made at least partially of air-permeable materials, in particularly of sintered materials. In preferred embodiment, the walls of the mould cavity have, over the entire inner surface of the mould cavity (apart from the inlet opening), an average air permeability higher or equal to the air permeability of a metal plate having a thickness of 1 mm and showing cylindrical perforations with a diameter of 1 mm covering 4 to 60%, preferably 8 to 40% and more preferably 12 to 30% of the surface of the metal plate. In other words, when applying a pressure difference over the walls of the mould cavity a same or a higher air flow rate is obtained than when applying this pressure difference over the metal plate over a surface area equal to the inner surface area of the walls of the mould cavity. When a sheet material is applied onto the walls of the mould cavity before introducing the mixture of binder and particles therein, the average air permeability of the covered walls is to be considered in this preferred embodiment of the invention.

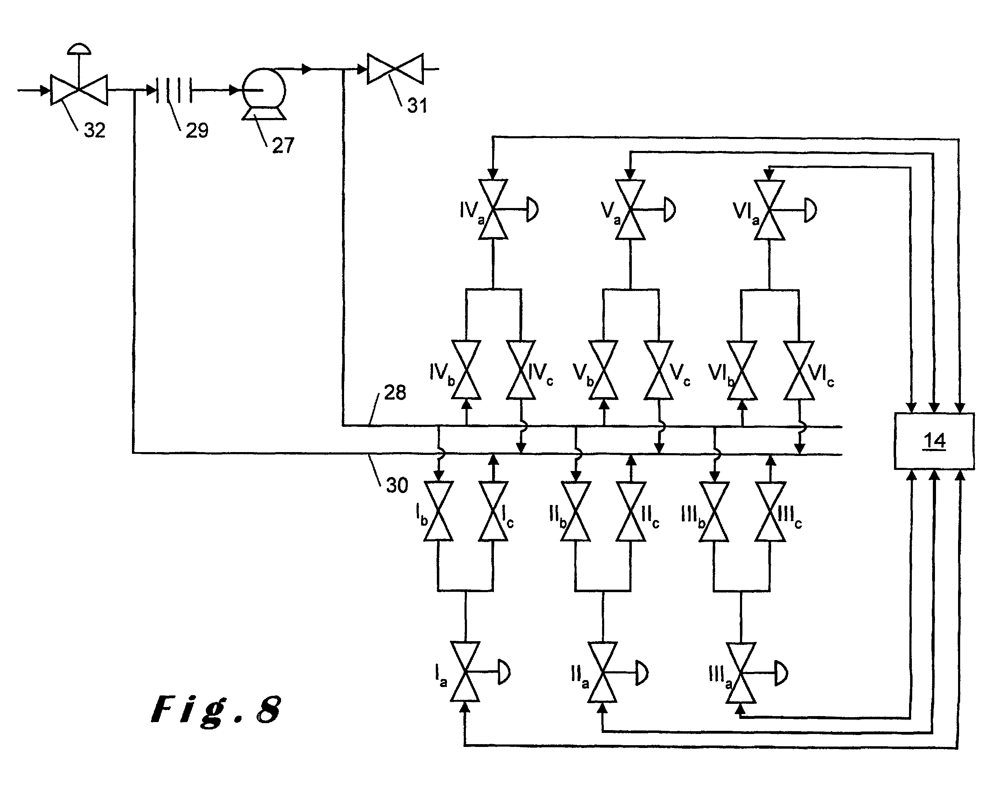

As illustrated in Figure 8, the blower 27 has an outlet connected to a blowing collector 28 and an inlet connected over a filter 29 to a suction collector 30. The blowing collector 28 is provided with an outlet valve 31 enabling to blow gas into the environment whilst the suction collector 30 is provided with a bypass valve 32 enabling to suck additional air from the environment. For generating the gas flow through the mould cavity, the apertures in the walls 25 of the lower mould part are arranged in three zones I, II, III which can each be connected via a duct over flow control valves Iₐ, IIₐ and IIIₐ either via shut off valves I_{b}, II_{b} and III_{b} to the blowing collector 28 or via shut off valves I_{c}, II_{c} and III_{c} to the suction collector 30. In Figure 8, a same number of flow control valves and shut off valves are illustrated for the upper mould part but since this upper mould part consists in the drawings only of the perforated lid 26, which is not divided in zones, only the flow control valve IVₐ and the shut off valves IV_{b} and IV_{c} are used.

In the drawings, the four zones of the inner surface of the mould cavity 10 are not only indicated on the mould itself but, in Figure 1, also on the moulded bonded foam article 1.

In Figures 2 and 3 it can clearly be seen that the ducts leading from the blowing 28 and the suction collector 30 end into coaxial cavities 33, 34, 35 enclosing the lower part of the mould. Cavity 33 surrounds zone I or the bottom portion of the mould, cavity 34 zone II situated above the bottom portion and cavity 35 zone III or the uppermost portion of the lower mould part. For the upper mould part, similar coaxial cavities could be provided. Since in the embodiment illustrated in the drawings the top part of the mould consist only of the perforated lid, only one duct is connected to one single cavity 36 provided above the mould.

A particular embodiment of the method according to the present invention will now be illustrated with reference to Figures 4 to 7.

In a first step, illustrated in Figure 4, the insert 2 is positioned in the mould 14 and the mixture of particles and binder is introduced therein through the adapter 11 and the inlet opening 13. During this filling step the cavities 33, 34 and 35 may all be connected to the suction collector 30 so that air is sucked over the entire inner surface 25 of the lower mould part out of the mould cavity 10. In each zone I, II and III the air flow can be adjusted by means of the control valves Iₐ, IIₐ and IIIₐ. When filling the mould cavity, the adapter is swivelled according to double arrow 19 to distribute the mixture over the mould cavity, more particles being introduced above the left hand side in view of the larger depth of the mould on this side. During the filling step the flow of gas through the mould cavity 10 is preferably controlled so that the particles are deposited directly onto the inner mould surface or onto one another substantially without circulating in the mould cavity. By means of the adapter 11, the mixture can thus be deposited in the required areas of the mould cavity. In areas where a larger amount of mixture is required, or a larger density, the flow rate of the air can be increased so that a larger densification is achieved in that area. In certain areas where a smaller density is required, one could even consider to blow air in the mould cavity by connecting the respective zone to the blowing collector. When a higher density is for example required in the lower zone of the mould cavity to achieve more rigid downward projecting parts, valves IIₐ and IIIₐ could for example be closed whilst valve Iₐ is opened for 100% so that the mixture is compressed against the bottom of the mould cavity 10.

As can be seen in Figure 4, the stream of mixture entering the mould cavity 10 through the inlet opening 13 has a cross-sectional surface area which is smaller than the surface area of the inlet opening. In this way the stream of mixture can be moved within the inlet opening to deposit the mixture in the required areas in the mould cavity, the mixture being prevented from escaping through the inlet opening next to the stream of the mixture by the fact that along the stream of the mixture a flow of air is generated through the inlet opening into the mould cavity. In Figure 4 both surface areas are measured in a horizontal flat plane through the inlet opening. In general, the surface areas are to be measured in a flat plane through the inlet opening and extending parallel thereto.

In the illustrated embodiment, it is not only possible to control the position of the stream of mixture in the inlet opening but it is also possible to control the direction and the shape thereof, more particularly by the swivelling motion of the adapter 11 and by the movement of the flaps 20, 22 in the adapter.

An advantageous feature of the embodiment illustrated in the drawings, is further that the inlet opening 13 is provided in the top side of the mould cavity 10. An advantage of this embodiment is that the mixture is at least partially introduced in the mould cavity by gravity and that the mixture can be deposited more easily and more accurately in the desired locations on the bottom of the mould cavity. When sucking through the side walls in zone's II and III, a portion of the stream of the mixture into the mixture is deviated towards these side walls so that the mixture is also deposited gradually onto the side walls when falling into the mould cavity. When introducing the mixture through a side wall, the mixture has on the contrary to be blown forward by the air flow over the bottom of the mould cavity making it, especially in the case of longer mould cavities, more difficult to deposit the mixture in the desired areas as the mixture will tend to accumulate by gravity and friction at a certain distance from the inlet opening on the bottom of the mould cavity.

When the mixture has been introduced in the mould cavity, the lid 26 is positioned onto the inlet opening 13 to close this opening as illustrated in Figure 5. In this step, the flow of gas is preferably maintained until the mould is closed. In this way, the mixture is kept compressed. In order to avoid swirling gas motions blowing the mixture out of the mould cavity when closing the lid, use is preferably made of a perforated or gas permeable lid. The flow rate of the air through the mould cavity may also be reduced once the mixture is introduced in the mould cavity since keeping the mixture compressed requires a smaller force than compressing the mixture. Instead of continuing the downward flow of gas until the mould cavity is closed it is also possible to stop the air flow once the mould cavity is filled. In this case the opening has to be closed more quickly since the mixture will expand again once the air flow is stopped or the mixture has to be compressed more strongly than illustrated in Figure 5 where the mixture substantially does not protrude out of the inlet opening 13.

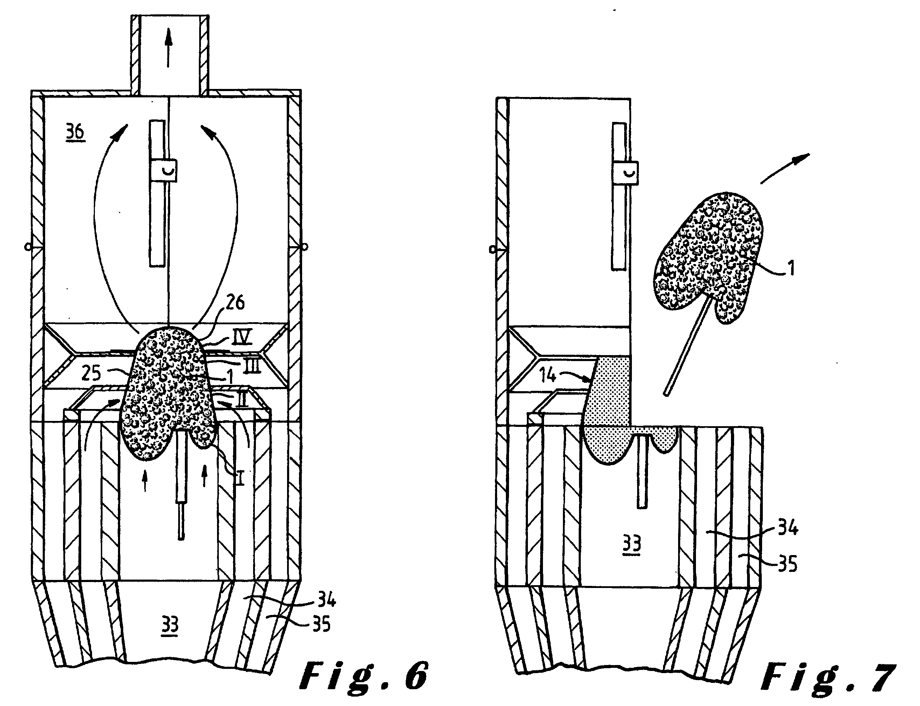

In the next step, the cavity 36 on top of the mould is closed and an air flow can be generated in another direction through the mould cavity, more particularly in an opposite direction so that the air flows through the perforated lid out of the mould cavity. Instead of being perforated, the lid could also be made of a gas permeable material such as for example a sintered material. As illustrated in Figure 6 the top cavity 36 is connected in this step to the suction collector 30 whilst one or more of the lower cavities 33, 34, 35 may be connected to the blowing collector. In this step, the outlet valve 31 is preferably opened so that the blowing collector is at atmospheric pressure. In the embodiment illustrated in Figure 6, the valve Iₐ is partially closed so that only a small upward air flow is generated through the bottom (in order to avoid that the density of the mixture in the recessed portions of the bottom would become too low), the valve IIₐ is completely open and the valve IIIₐ is closed so that in this step especially the density in zone II is reduced by sucking part of the mixture in zone IV, i.e. in the lid portion. By an appropriate setting of the different valves, and by adjusting the suction unit, a substantially uniform density can thus be achieved in this step notwithstanding the fact that during the filling step a density gradient was created. When a density gradient is on the other hand desired, for example a higher density in the bottom zone I, valves IIₐ and IIIₐ could be opened and valve Iₐ closed so that most of the mixture remains in zone I during this density optimisation step.

After the density optimisation step, steam is guided through the mixture to cure the binder. During this steaming step, valves Iₐ and IVₐ can be opened to generate an upward gas flow through the mould cavity. During this step, an additional compression of the foam particles can be achieved in the upper zone IV, either to achieve a uniform density or to achieve a higher density in this upper zone to produce a more rigid top portion of the moulded bonded foam article. As illustrated in Figure 7 a portion of the mould is removed after the steaming step and the moulded article is demoulded.

In the above described embodiment the flow of gas through the mould cavity when filling it with the mixture is generated by sucking 100% of this gas flow out of the mould cavity, the gas entering the mould cavity for 100% at atmospheric pressure or at a pressure which is somewhat below atmospheric pressure due to the amount of air sucked into the mould cavity. Instead of generating the flow of gas exclusively by sucking gas out of the mould cavity, one could also consider to provide an enclosure around the top portion of the mould wherein an above ambient pressure is created, for example a pressure of 1.5 bars or lower. In this case, no suction is required in the lower part of the mould but, in order to have a better control of the areas where the particles are deposited in the mould cavity, preferably at least 50%, and more preferably at least 80% of the gas flow is still sucked out of the mould cavity. By sucking the gas out of the mould cavity, it is in particular also easier to avoid undesired gas circulations in the mould cavity hampering a good control of the locations where the particles are deposited.

As explained hereabove, not all the air has to enter the mould cavity at atmospheric pressure, or at a somewhat lower pressure, when filling the mould cavity. Indeed, it is also possible to blow air at a higher pressure in certain zones in the mould cavity. In a preferred embodiment, at least 50%, preferably at least 70% and most preferably at least 90% of the flow of gas enters the mould cavity at atmospheric or at a below atmospheric pressure.

An essential feature of the method according to the invention is that the mixture introduced in the mould cavity is compressed by the flow of gas so that it is in a first compressed state when the lid 16 is closed and a density gradient is present in the foam. In this first compressed state the mixture may protrude out of the opening to such an extend that it is compressed by the lid when closing it. Such a situation may in particular arise when the mould is a relatively large but flat mould, the inlet opening occupying a large portion of the large side of the mould. In this way, high densities can be achieved, at least in certain areas, by the mechanical compression of the mixture. As illustrated in the drawings, the mixture may however also be compressed in such a manner by the flow of gas that it is not compressed by the lid when closing it. In a preferred embodiment, the mixture has an apparent density of d kg/m³ before being introduced in the mould cavity and has, in said first compressed state, an average density of at least 1.5 x d kg/m³ and preferably of at least 2.0 x d kg/m³. In practice, the apparent density will usually be situated between 10 and 50 kg/m³ whilst the compressed mixture will usually have a density lower than 250 kg/m³. The apparent density depends of course on the density of the foam itself but also on the size of the foam particles, smaller foam particles providing normally a higher density and need thus less compression.

In order to enable to compress the mixture over a great portion of the inner mould surface, in particular substantially over the entire inner mould surface, the flow of gas through the mould cavity is controlled when introducing the mixture in the mould cavity to reach for a predetermined period of time a minimum flow rate, expressed in normal m³ of gas per minute, of at least 500 times, preferably at least 1000 times and most preferably at least 2000 times the inner volume V, expressed in m³, which the mould cavity has when the inlet opening is closed. For determining the volume of the mould cavity, the volume of the upper mould part is also to be taken into account. When a mechanical compression of the mixture is performed after having filled the mould cavity, for example by means of slides or sliding mould walls, the volume of the mould cavity is to be determined before such a mechanical compression.

When the flow of gas is not controlled when filling the mould cavity, the flow rate will of course decrease in function of the amount of mixture introduced in the mould cavity. In a preferred embodiment, the above described flow rates are not only achieved in a first phase when filling the mould cavity but also when all the particles are introduced in the mould cavity. Subsequently, as explained already hereabove, the flow rate can be reduced, or the flow of gas can even be stopped completely, when closing the mould.

In order to make it easier to avoid undesired air circulations in the mould cavity when introducing the mixture therein, the inlet opening has a relatively large surface area measured according to a flat plane through the inlet opening and parallel thereto. When the mould cavity has, measured parallel to said flat plane, a cross-sectional surface area comprised between a minimum and a maximum value, the predetermined surface area of the inlet opening is more particularly at least equal to 30%, preferably to 45% and more preferably to 60% of the maximum cross-sectional surface area of the mould cavity.

In the embodiment illustrated in the drawings, and referring in particular to Figure 1, the inlet opening has a surface area of about 184 cm² (= 23 x 8 cm) whilst the mould cavity shows a maximal cross-sectional surface area substantially at the transition of zone I and II of about 280 cm². The surface area of the inlet opening is thus substantially 65 % of the maximum cross-sectional surface area of the mould cavity.

In view of enabling a good mechanical distribution of the mixture into the mould cavity, the surface area of the inlet opening, measured according to said flat plane is further relatively large with respect to the surface area of the moulded bonded foam article. The surface area of the inlet opening comprises more particularly at least 3%, preferably at least 5% and most preferably at least 8% of the surface area of the moulded bonded foam article. In the example illustrated in the drawings, the headrest has for example a total surface area of about 1250 cm² so that the surface area of the inlet opening (about 184 cm²) comprises about 14% of this surface area.

### Example I

With the installation illustrated in the drawings a headrest was made having the above described dimensions and a volume of 3.8 I. Use was made of a mixture of 50% by weight flocks of a polyurethane foam having a density of 25 kg/m³ and an ILD40 value of 150 and 50% by weight flocks of polyurethane foam having a density of 35 kg/m³ and an ILD40 value of 180. The flocks were prepared by a comminuting operation during which the flocks having a size smaller than 10 mm were removed by means of a 10 mm sieve. The flocks had thus a size of about 10 mm and smaller. The flocks were mixed with a polyurethane prepolymer as binder (10% by weight of the flocks) to produce 270 g of mixture. This mixture had an apparent density of 25.6 kg/m³. The produced headrest had a density of 70 kg/m³ so that the mixture was finally compressed with a compression factor of 2.8.

The mixture was introduced by means of the vibrating gutter into the mould cavity whilst an air flow was generated therethrough by connecting the zones I, II and III of the lower mould part to the suction collector. The blower unit was set to 40 % of its maximum capacity and valve Iₐ was opened for 75% whilst valves IIₐ and IIIₐ where entirely opened. The outlet valve 31 was opened and the by-pass was closed.

The mould cavity was filled in about 55 seconds. During filling the flow rate dropped from about 13 m³/min to about 8.5 m³/min, i.e. from about 3420 times the mould volume per minute to about 2235 times the mould volume per minute. When filling the mould cavity, it could be seen that all the flocks were directly deposited onto the inner mould surface and onto one another so that the location where the flocks were deposited could be controlled very well by swinging the adapter.

Once filled, valve Iₐ was further closed to 50% and the capacity of the blower unit was reduced to 20%. In this way the mixture was kept substantially level with the inlet opening when closing the lid. This closing step took about 10 seconds.

Subsequently, the cavity 36 on top of the mould was closed and was connected to the suction collector over valve IVₐ which was opened for 100%. Valve IIIₐ was now closed, valve IIₐ remained open for 100% and valve Iₐ was kept open for only 10%. The zones I, II and III of the lower mould part were connected to the blowing collector by closing valves I_{c}, II_{c} and III_{c} and opening valves I_{b}, II_{b} and III_{b}. Since outlet valve 31 remained opened, the pressure within the blowing collector was substantially equal to the atmospheric pressure. The capacity of the blower unit was set in this step to 25%. This density optimisation step was carried out for 20 seconds.

Next the binder was cured by means of steam injected in the cavity 33 below the bottom zone I of the mould cavity. All the valves were closed except valve la (opened for 100% and connected to the blowing collector which was at atmospheric pressure by the open outlet valve) and valve IVa (opened for 40% and connected to the suction collector to suck the steam through the mould cavity). In this steaming step, the capacity of the blower unit was set at 50%.

After the steaming operation, the moulded bonded foam article was demoulded. Density measurements have shown that a quite uniform foam density was achieved in the article. It was more particularly observed that both in the narrower recess in the bottom of the mould cavity and in the top portion of the mould a density was achieved which was substantially equal to the overall density of the article, the metal insert of course not included.

### Example II

Example I was repeated but the flow of air through the mould cavity was controlled to achieve a higher density in the bottom zone I.

During the filling step, the capacity of the blower unit was set at 50% and only valve Iₐ (connected to the suction collector 30) was entirely opened whilst the other valves were closed. Filling of the mould cavity took 20 sec. When closing the lid, the capacity of the blower unit was reduced to 20%, only valve Iₐ was kept open. During the subsequent density optimisation step, which was performed for 10 seconds, valve IVₐ was opened for 100% and connected to the suction collector 30 whilst valve Iₐ remained open for 100% but was now connected via valve I_{b} to the blowing collector 28 which was kept at atmospheric pressure due to the open outlet valve 31. The capacity of the blower unit was set in this step at 10%.

The steaming step was then performed in the same way as in Example I.

Density measurements have shown the following average densities (kg/m³) in the different zones of the moulded bonded foam article:
Zone I : 84.5
Zone II : 74.1
Zone III : 58.8
Zone IV : 61.3

From this example it appears that the method according to the invention enables to achieve a higher density in a bottom portion of the moulded bonded foam article.

### Example II

Example I was repeated but the flow of air through the mould cavity was controlled to achieve a higher density in the top zone IV.

During the filling step, the capacity of the blower unit was set at 50% and only valve Iₐ (connected to the suction collector 30) was entirely opened whilst the other valves were closed. Filling of the mould cavity took 20 sec. When closing the lid, the capacity of the blower unit was reduced to 20%, only valve Iₐ was kept open. During the subsequent density optimisation step, which was performed for 10 seconds, valve IVₐ was opened for 100% and connected to the suction collector 30 whilst valve Iₐ remained open for 100% but was now connected via valve I_{b} to the blowing collector 28 which was kept at atmospheric pressure due to the open outlet valve 31. The capacity of the blower unit was set in this step at 40%.

The steaming step was then performed in the same way as in Example I.

Density measurements have shown the following average densities (kg/m³) In the different zones of the moulded bonded foam article:
Zone I : 68.1
Zone II : 73.5
Zone III : 64.2
Zone IV : 89.5

From this example it appears that the method according to the invention enables to achieve a higher density in a top portion of the moulded bonded foam article.

## Claims

1. A method for producing a moulded bonded foam article (1) comprising the steps of:
- providing particles, including foam particles, for producing the moulded bonded foam article (1);
- applying a binder onto the particles to achieve a mixture;
- introducing an amount of said mixture into a cavity (10) of a mould (14), through at least one inlet opening (13) in this mould (14), while generating a flow of gas through the mould cavity (10);
- closing the inlet opening (13) when the mixture has been introduced in the mould cavity (10);
- allowing said binder to set with the particles in a compressed state to form the moulded bonded foam article (1); and
- demoulding the produced moulded bonded foam article (1),
**characterised in that**
the flow of gas through the mould cavity (10) is controlled when introducing the mixture in the mould cavity (10) to reach for a predetermined period of time a minimum flow rate, expressed in normal m³ of gas per minute, of at least 500 times, preferably at least 1000 times and most preferably at least 2000 times the inner volume V, expressed in m³, which the mould cavity (10) has when the inlet opening (13) is closed in order to compress the mixture so that it is in a first compressed state upon closing the inlet opening (13).

2. A method according to claim 1, **characterised in that** the flow of gas through the mould cavity (10) is controlled when introducing the mixture in the mould cavity (10) in such a manner that when all the particles are introduced into the mould cavity (10), said minimum flow rate is still achieved.

3. A method according to claim 1 or 2, **characterised in that** use is made of a mould (14), the inlet opening (13) of which has, measured according to a flat plane parallel to the inlet opening (13), a predetermined surface area and the mould cavity (10) of which has, measured parallel to said flat plane, a cross-sectional surface area comprised between a minimum and a maximum value, the predetermined surface area of the inlet opening (13) being at least equal to 30%, preferably to 45% and more preferably to 60% of said maximum cross-sectional surface area.

4. A method according to any one of the claims 1 to 3, **characterised in that** use is made of a mould (14), the inlet opening (13) of which has, measured in a flat plane parallel to the inlet opening (13), a predetermined surface area, the mixture being introduced into the mould cavity (10) in at least one stream having, measured also according to said flat plane, a cross-sectional surface area which is smaller than said predetermined surface area of the inlet opening (13) and, when introducing the mixture in the mould cavity (10), said flow of gas is directed to enter the mould cavity at least partially through the area of the inlet opening (13) next to the stream of mixture.

5. A method according to any one of the claims 1 to 4, **characterised in that** when the mixture has been introduced into the mould cavity (10), the generation of the flow of gas through the mould cavity (10) is continued substantially until the inlet opening (13) is closed, the flow of gas through the mould cavity (10) being controlled both when introducing the mixture in the mould cavity (10) and after having introduced the mixture therein so that the mixture is compressed by the flow of gas and is in said first compressed state upon closing the inlet opening (13).

6. A method according to any one of the claims 1 to 5, **characterised in that** the flow of gas through the mould cavity (10) is controlled in such a manner that when being introduced in the mould cavity (10) the particles are directly deposited onto the inner mould surface and/or onto one another substantially without circulating in the mould cavity (10).

7. A method according to any one of the claims 1 to 6, **characterised in that** for producing a moulded bonded foam article (1) having a predetermined surface area, use is made of a mould (14), the inlet opening (13) of which has a surface area, measured according to a flat plane parallel to the inlet opening (13), which comprises at least 3%, preferably at least 5% and most preferably at least 8% of the surface area of the moulded bonded foam article (1).

8. A method according to any one of the claims 1 to 7, **characterised in that** the mixture of particles and binder to be introduced in the mould cavity (10) has an apparent density of d kg/m³ and has, in said first compressed state, an average density of at least 1.5 x d kg/m³ and preferably of at least 2.0 x d kg/m³.

9. A method according to any one of the claims 1 to 8, **characterised in that** the inlet opening (13) is provided in a top side of the mould cavity (10) so that the mixture is introduced therein at least partially by gravity.

10. A method according to any one of the claims 1 to 9, **characterised in that** said mixture is introduced into the mould cavity (10) in at least one stream, the direction, position and/or shape of which is controlled when introducing the mixture into the mould cavity (10) to direct the mixture into the mould cavity (10).

11. A method according to any one of the claims 1 to 10, **characterised in that** said flow of gas is at least partially generated by sucking gas out the mould cavity (10).

12. A method according to claim 11, **characterised in that** at least 50%, preferably at least 80% and most preferably substantially 100% of said gas flow is sucked out of the mould cavity (10).

13. A method according to claim 11 or 12, **characterised in that** at least 50%, preferably at least 70% and most preferably at least 90% of said flow of gas enters the mould cavity (10) at atmospheric pressure or at a below atmospheric pressure.

14. A method according to any one of the claims 1 to 13, **characterised in that** after having introduced the mixture into the mould cavity (10), the inlet opening (13) is closed by means of a perforated and/or gas permeable lid (26).

15. A method according to any one of the claims 1 to 14, **characterised in that** use is made of a mould (14), the mould cavity (10) of which is delimited, when introducing the mixture therein, by walls (25) which show said inlet opening (13) for the mixture and which are further provided with gas in- and/or outlet apertures for generating said flow of gas through the mould cavity (10), the gas in- and/or outlet apertures and said inlet opening (13) being arranged in at least three different zones (I, II, III, IV) wherein the flow of gas is controlled through said apertures and/or said inlet opening (13) when introducing the mixture in the mould cavity (10).

16. A method according to any one of the claims 1 to 15, **characterised in that** after having closed the inlet opening (13), a further flow of gas is generated through the closed mould (14) in a direction different from the direction of said flow of gas when introducing the mixture into the mould cavity (10) to modify the density distribution of the mixture, the inlet opening (13) being preferably closed by means of a perforated and/or gas permeable lid (26) and the further flow of gas being preferably at least partially guided through this lid (26).

17. A method according to any one of the claims 1 to 16, **characterised in that** said foam particles comprise flexible foam particles having in particular a compression hardness, measured in accordance with the standard DIN 53577, smaller than 15 kPa, and more particularly smaller than 10 kPa, the flexible foam particles constituting in particular at least 30 vol. %, and more particularly at least 50 vol. % of said particles.

18. A method according to any one of the claims 1 to 17, **characterised in that** said particles comprise at least 50 vol. %, preferably at least 75 vol. % of open-cell foam particles having an open cell content of at least 50%.

19. An installation for producing moulded bonded foam articles (1) starting from particles, including foam particles, which installation comprises a device (4, 7) for applying a binder onto the particles to produce a mixture of particles and binder, a mould (14) showing a mould cavity (10) having an inlet opening (13) and being arranged to mould said articles (1) therein, means (8, 9) for introducing an amount of said mixture through said inlet opening (13) into the mould cavity (10), means (27) for generating a flow of gas through the mould cavity (10) when the mixture is being introduced therein, and means (26) for closing the inlet opening (13) when the mixture has been introduced in the mould cavity (10), **characterised in that** said gas flow generating means (27) are arranged to generate a flow of gas through the mould cavity (10) reaching for a predetermined period of time when the mixture is being introduced in the mould cavity (10) a minimum flow rate, expressed in normal m³ of gas per minute, of at least 500 times, preferably at least 1000 times and most preferably at least 2000 times the inner volume V, expressed in m³, which the mould cavity (10) has when the inlet opening (13) is closed.

20. An installation according to claim 19, **characterised in that** the inlet opening (13) in the mould cavity (10) has, measured according to a flat plane parallel to the inlet opening (13), a predetermined surface area and the mould cavity (10) has, measured parallel to said flat plane, a cross-sectional surface area comprised between a minimum and a maximum value, the predetermined surface area of the inlet opening (13) being at least equal to 30%, preferably to 45% and more preferably to 60% of said maximum cross-sectional area.

21. An installation according to claim 19 or 20, **characterised in that** said gas flow generating means (27) comprise a suction device (27) arranged to suck at least 50%, preferably at least 80% and most preferably substantially 100% of said gas flow out of the mould cavity (27).

22. An installation according to any one of the claims 19 to 21, **characterised in that** the mould cavity (10) is arranged for producing a moulded bonded foam article (1) having a predetermined surface area, the inlet opening (13) in the mould cavity (10) having, measured according to a flat plane parallel to the inlet opening (13), a surface area comprising at least 3%, preferably at least 5% and most preferably at least 8% of the surface area of the moulded bonded foam article (1).

23. An installation according to any one of the claims 19 to 22, **characterised in that** the inlet opening (13) is provided in a top side of the mould cavity (10).

24. An installation according to any one of the claims 19 to 23, **characterised in that** the inlet opening (13) in the mould cavity (10) has, measured according to a flat plane parallel to the inlet opening (13), a predetermined surface area and the means (8, 9) for introducing the mixture through this inlet opening (13) in the mould cavity (10) are arranged to introduce the mixture in at least one stream having a cross-sectional surface area, measured also according to said flat plane, smaller than said predetermined surface area.

25. An installation according to any one of the claims 19 to 24, **characterised in that** the means (8, 9) for introducing the mixture in the mould cavity (10) are arranged to introduce the mixture in at least one stream through the inlet opening (13) of the mould cavity (10), and **in that** the installation further comprises means (11) for modifying the direction, position and/or shape of this stream when the mixture is being introduced in the mould cavity (10).

26. An installation according to any one of the claims 19 to 25, **characterised in that** the mould cavity (10) is delimited by walls (25) which show, when the mixture is being introduced therein, said inlet opening (13) for the mixture and gas in- and/or outlet apertures, the gas in- and/or outlet apertures and said inlet opening (13) being arranged in at least three different zones (I, II, III, IV) connected via flow rate control means to said gas flow generating means (27).

27. An installation according to claim 26, **characterised in that** said gas flow generating means (27) comprise a gas pumping unit, in particular a blower, having a gas inlet and a gas outlet, the gas flow generating means (27) comprising further for each of said different zones (I, II, III, IV) a suction duct for connecting the zone to the gas inlet of the gas pumping unit (27), a blowing duct for connecting the zone to the gas outlet of the gas pumping unit (27), and control means (I_{a-c}, II_{a-c}, III_{a-c}, IV_{a-c}, V_{a-c}, VI_{a-c},) controlling the flow of gas for each of said different zones in said suction and blowing ducts.

28. An installation according to any one of the claims 19 to 27, **characterised in that** the mould cavity (10) is delimited by said inlet opening (13) and by means of walls (25) showing an average air permeability higher or equal to the air permeability of a metal plate having a thickness of 1 mm and showing cylindrical perforations with a diameter of 1 mm covering 4 to 60%, preferably 8 to 40% and more preferably 12 to 30% of the surface of the metal plate.

## Patentansprüche

1. Verfahren zur Herstellung eines Artikels aus geformtem und gebundenem Schaum (1), umfassend die folgenden Schritte:
- Bereitstellen von Partikeln, einschließlich Schaumpartikeln für die Herstellung des Artikels aus geformtem und gebundenem Schaum (1);
- Aufbringen eines Bindemittels auf die Partikel, um ein Gemisch zu erzielen;
- Einführen einer Menge des Gemischs in einen Hohlraum (10) einer Form (14) durch mindestens eine Einlassöffnung (13) in dieser Form (14), während ein Gasfluss durch den Formhohlraum (10) erzeugt wird;
- Schließen der Einlassöffnung (13), wenn das Gemisch in den Formhohlraum (10) eingeführt worden ist;
- Bindemittel mit den Partikeln in einem komprimierten Zustand abbinden lassen, um den Artikel aus geformtem und gebundenem Schaum (1) zu bilden ; und
- Entschalen des aus geformtem und gebundenem Schaum hergestellten Artikels (1),
**dadurch gekennzeichnet, dass**
der Gasfluss durch den Formhohlraum (10) kontrolliert wird, wenn das Gemisch in den Formhohlraum (10) eingeführt wird, um für eine vorab festgelegte Zeitspanne eine Mindestfließgeschwindigkeit, die in normalen m³ Gas pro Minute angegeben wird, von mindestens 500 mal, vorzugsweise mindestens 1000 mal und am Bevorzugtesten mindestens 2000 mal das innere Volumen V zu erzielen, das in m³ ausgedrückt wird, das der Formhohlraum (10) aufweist, wenn die Einlassöffnung (13) geschlossen ist, um das Gemisch so zu komprimieren, dass es sich nach dem Schließen der Einlassöffnung (13) in einem ersten komprimierten Zustand befindet.

2. Verfahren nach Anspruch 1, **dadurch gekennzeichnet, dass** der Gasfluss durch den Formhohlraum (10) kontrolliert wird, wenn das Gemisch in den Formhohlraum (10) eingeführt wird, so dass, wenn alle Partikel in den Formhohlraum (10) eingeführt sind, die Mindestfließgeschwindigkeit immer noch erzielt wird.

3. Verfahren nach Anspruch 1 oder 2, **dadurch gekennzeichnet, dass** eine Form (14) verwendet wird, deren Einlassöffnung (13), gemessen entlang einer flachen, zu der Einlassöffnung (13) parallelen Ebene, einen vorab festgelegten Oberflächenbereich aufweist, und deren Formhohlraum (10), gemessen parallel zu der flachen Ebene, einen Querschnitts-Oberflächenbereich besitzt, der zwischen einem Mindest- und einem Höchstwert liegt, wobei der vorab festgelegte Oberflächenbereich der Einlassöffnung (13) mindestens gleich 30 %, vorzugsweise 45 % und am Bevorzugtesten 60 % des maximalen Querschnitts-Oberflächenbereichs ist.

4. Verfahren nach einem der Ansprüche 1 bis 3, **dadurch gekennzeichnet, dass** eine Form (14) verwendet wird, deren Einlassöffnung (13), gemessen in einer flachen, zu der Einlassöffnung (13) parallelen Ebene, einen vorab festgelegten Oberflächenbereich aufweist, wobei das Gemisch in den Formhohlraum (10) in mindestens einem Strom eingeführt wird, der, ebenso entlang der flachen Ebene gemessen, einen Querschnitts-Oberflächenbereich besitzt, der kleiner als der vorab festgelegte Oberflächenbereich der Einlassöffnung (13) ist, und der Gasfluss, wenn das Gemisch in den Formhohlraum (10) eingeführt wird, so geleitet wird, dass er in den Formhohlraum zumindest teilweise durch den Bereich der Einlassöffnung (13) neben dem Gemischstrom eintritt.

5. Verfahren nach einem der Ansprüche 1 bis 4, **dadurch gekennzeichnet, dass**, wenn das Gemisch in den Formhohlraum (10) eingeführt worden ist, die Erzeugung des Gasflusses durch den Formhohlraum (10) im wesentlichen fortgesetzt wird, bis die Einlassöffnung (13) geschlossen ist, wobei der Gasfluss durch den Formhohlraum (10) sowohl beim Einführen des Gemischs in den Formhohlraum (10) als auch nach dem Einführen des Gemischs darin so kontrolliert wird, dass das Gemisch durch den Gasfluss komprimiert wird und sich nach dem Schließen der Einlassöffnung (13) in dem ersten komprimierten Zustand befindet.

6. Verfahren nach einem der Ansprüche 1 bis 5, **dadurch gekennzeichnet, dass** der Gasfluss durch den Formhohlraum (10) so kontrolliert wird, dass, wenn er in den Formhohlraum (10) eingeführt wird, die Partikel direkt auf der inneren Fläche der Form und/oder übereinander abgelegt werden, ohne im wesentlichen in dem Formhohlraum (10) zu zirkulieren.

7. Verfahren nach einem der Ansprüche 1 bis 6, **dadurch gekennzeichnet, dass** zur Herstellung eines Artikels aus geformtem und gebundenem Schaum (1) mit einem vorab festgelegten Oberflächenbereich eine Form (14) verwendet wird, deren Einlassöffnung (13) einen Oberflächenbereich aufweist, gemessen entlang einer flachen, zu der Einlassöffnung (13) parallelen Ebene, der mindestens 3%, vorzugsweise 5% und am Bevorzugtesten 8% des Oberflächenbereichs des Artikels aus geformtem und gebundenem Schaum (1) umfasst.

8. Verfahren nach einem der Ansprüche 1 bis 7, **dadurch gekennzeichnet, dass** das Gemisch aus Partikeln und Bindemittel, das in den Formhohlraum (10) eingeführt werden soll, eine offenkundige Dichte von d kg/m³ besitzt und in einem ersten komprimierten Zustand eine durchschnittliche Dichte von mindestens 1,5 x d kg/m³ und vorzugsweise von mindestens 2,0 x d kg/m³ aufweist.

9. Verfahren nach einem der Ansprüche 1 bis 8, **dadurch gekennzeichnet, dass** die Einlassöffnung (13) in einer oberen Seite des Formhohlraums (10) vorgesehen ist, so dass das darin eingeführte Gemisch wenigstens teilweise durch Schwerkraft eingeführt wird.

10. Verfahren nach einem der Ansprüche 1 bis 9, **dadurch gekennzeichnet, dass** das Gemisch in den Formhohlraum (10) in mindestens einem Strom eingeführt wird, dessen Richtung, Position und/oder Form beim Einführen des Gemischs in den Formhohlraum (10) kontrolliert wird, um das Gemisch in den Formhohlraum (10) zu richten.

11. Verfahren nach einem der Ansprüche 1 bis 10, **dadurch gekennzeichnet, dass** der Gasfluss wenigstens teilweise durch Ansaugen von Gas aus dem Formhohlraum (10) erzeugt wird.

12. Verfahren nach Anspruch 11, **dadurch gekennzeichnet, dass** mindestens 50%, vorzugsweise mindestens 80% und am Bevorzugtesten im wesentlichen 100% des Gasflusses aus dem Formhohlraum (10) angesaugt wird.

13. Verfahren nach Anspruch 11 oder 12, **dadurch gekennzeichnet, dass** mindestens 50%, vorzugsweise mindestens 70% und am Bevorzugtesten mindestens 90% des Gasflusses in den Formhohlraum (10) unter atmosphärischem Druck oder einem unter atmosphärischen Druck liegenden Druck eintreten.

14. Verfahren nach einem der Ansprüche 1 bis 13, **dadurch gekennzeichnet, dass** nach dem Einführen des Gemischs in den Formhohlraum (10) die Einlassöffnung (13) durch einen perforieren und/oder gasdurchlässigen Deckel (26) verschlossen wird.

15. Verfahren nach einem der Ansprüche 1 bis 14, **dadurch gekennzeichnet, dass** eine Form (14) verwendet wird, deren Formhohlraum (10), wenn das Gemisch eingeführt wird, durch Wände (25) begrenzt wird, welche die Einlassöffnung (13) für das Gemisch aufweisen und die des weiteren mit Gaseinlass- und/oder -auslassöffnungen zum Erzeugen des Gasflusses durch den Formhohlraum (10) versehen sind, wobei die Gaseinlass- und/oder -auslassöffnungen und die Einlassöffnung (13) in mindestens drei verschiedenen Zonen (I, II, III, IV) angeordnet sind, in denen der Gasfluss durch die Öffnungen und/oder die Einlassöffnung (13) kontrolliert wird, wenn das Gemisch in den Formhohlraum (10) eingeführt wird.

16. Verfahren nach einem der Ansprüche 1 bis 15, **dadurch gekennzeichnet, dass** nach dem Schließen der Einlassöffnung (13) ein weiterer Gasfluss durch die geschlossene Form (14) in eine Richtung erzeugt wird, die sich von der Richtung des Gasflusses beim Einführen des Gemischs in den Formhohlraum (10) unterscheidet, um die Dichteverteilung des Gemischs zu verändern, wobei die Einlassöffnung (13) vorzugsweise mittels eines perforierten und/oder gasdurchlässigen Deckels (26) geschlossen wird, und der weitere Gasfluss vorzugsweise wenigstens teilweise durch diesen Deckel (26) geleitet wird.

17. Verfahren nach einem der Ansprüche 1 bis 16, **dadurch gekennzeichnet, dass** die Schaumpartikel flexible Schaumpartikel umfassen, die insbesondere eine Kompressionshärte besitzen, die in Übereinstimmung mit der Norm DIN 53577 gemessen wird, kleiner als 15 kPa ist und insbesondere kleiner als 10 kPa ist, wobei die flexiblen Schaumpartikel insbesondere mindestens 30 Volumenanteile und noch besser mindestens 50 Volumenanteile der Partikel bilden.

18. Verfahren nach einem der Ansprüche 1 bis 17, **dadurch gekennzeichnet, dass** die Partikel mindestens 50 Volumenanteile, vorzugsweise mindestens 75 Volumenanteile von offenzelligen Schaumpartikeln umfassen, die einen offenzelligen Gehalt von mindestens 50% besitzen.

19. Einrichtung für die Herstellung von Artikeln aus geformtem und gebundenem Schaum (1), ausgehend von Partikeln, einschließlich Schaumpartikeln, wobei die Einrichtung eine Vorrichtung (4, 7) zum Aufbringen eines Bindemittels auf die Partikel umfasst, um ein Gemisch aus Partikeln und Bindemittel zu erzeugen, eine Form (14) mit einem Formhohlraum (10), der eine Einlassöffnung (13) aufweist und so angeordnet ist, dass darin die Artikel (1) geformt werden können, Mittel (8, 9) zum Einführen einer Menge des Gemischs durch die Einlassöffnung (13) in den Formhohlraum (10), Mittel (27) zum Erzeugen eines Gasflusses durch den Formhohlraum (10), wenn darin das Gemisch eingeführt wird, und Mittel (26) zum Schließen der Einlassöffnung (13), wenn das Gemisch in den Formhohlraum (10) eingeführt worden ist, **dadurch gekennzeichnet, dass** die Mittel (27) zum Erzeugen des Gasflusses so angeordnet sind, dass sie einen Gasfluss durch den Formhohlraum (10) erzeugen, der für eine vorab festgelegte Zeitspanne, wenn das Gemisch in den Formhohlraum (10) eingeführt wird, eine Mindestfließgeschwindigkeit erreicht, die in normalen m³ Gas pro Minute angegeben wird, von mindestens 500 mal, vorzugsweise mindestens 1000 mal und am Bevorzugtesten mindestens 2000 mal das innere Volumen V, das in m³ ausgedrückt wird, das der Formhohlraum (10) aufweist, wenn die Einlassöffnung (13) geschlossen ist.

20. Einrichtung nach Anspruch 19, **dadurch gekennzeichnet, dass** die Einlassöffnung (13) in dem Formhohlraum (10), gemessen entlang einer flachen, zu der Einlassöffnung (13) parallelen Ebene, einen vorab festgelegten Oberflächenbereich aufweist, und der Formhohlraum (10), gemessen parallel zu der flachen Ebene, einen Querschnitts-Oberflächenbereich besitzt, der zwischen einem Mindest- und einem Höchstwert liegt, wobei der vorab festgelegte Oberflächenbereich der Einlassöffnung (13) mindestens gleich 30%, vorzugsweise 45% und am Bevorzugtesten 60% des maximalen Querschnitts-Oberflächenbereichs ist.

21. Einrichtung nach Anspruch 19 oder 20, **dadurch gekennzeichnet, dass** die Mittel (27) zum Erzeugen des Gasflusses eine Ansaugvorrichtung (27) umfassen, die so angeordnet ist, dass sie mindestens 50%, vorzugsweise mindestens 80% und Bevorzugtesten im wesentlichen 100% des Gasflusses aus dem Formhohlraum (10) ansaugt.

22. Vorrichtung nach einem der Ansprüche 19 bis 21, **dadurch gekennzeichnet, dass** der Formhohlraum (10) zur Herstellung eines Artikels aus geformtem und gebundenem Schaum (1) mit einem vorab festgelegten Oberflächenbereich angeordnet ist, wobei die Einlassöffnung (13) in dem Formhohlraum (10), gemessen entlang einer flachen, zu der Einlassöffnung (13) parallelen Ebene, einen Oberflächenbereich besitzt, der mindestens 3%, vorzugsweise mindestens 5% und am Bevorzugtesten mindestens 8% des Oberflächenbereichs des Artikels aus geformtem und gebundenem Schaum (1) umfasst.

23. Einrichtung nach einem der Ansprüche 19 bis 22, **dadurch gekennzeichnet, dass** die Einlassöffnung (13) in einer oberen Seite des Formhohlraums (10) vorgesehen ist.

24. Einrichtung nach einem der Ansprüche 19 bis 23, **dadurch gekennzeichnet, dass** die Einlassöffnung (13) in dem Formhohlraum (10), gemessen entlang einer flachen, zu der Einlassöffnung (13) parallelen Ebene, einen vorab festgelegten Oberflächenbereich aufweist, und die Mittel (8, 9) zum Einführen des Gemischs durch diese Einlassöffnung (13) in den Formhohlraum (10) angeordnet sind, um das Gemisch in mindestens einem Strom einzuführen, der einen Querschnitts-Oberflächenbereich aufweist, ebenfalls entlang der flachen Ebene gemessen, der kleiner als der vorab festgelegte Oberflächenbereich ist.

25. Einrichtung nach einem der Ansprüche 19 bis 24, **dadurch gekennzeichnet, dass** die Mittel (8, 9) zum Einführen des Gemischs in den Formhohlraum (10) angeordnet sind, um das Gemisch in mindestens einem Strom durch die Einlassöffnung (13) des Formhohlraums (10) einzuführen, und dadurch, dass die Einrichtung des weiteren Mittel (119 zum Verändern von Richtung, Position und/oder Form dieses Stroms umfasst, wenn das Gemisch in den Formhohlraum (10) eingeführt wird.

26. Einrichtung nach einem der Ansprüche 19 bis 25, **dadurch gekennzeichnet, dass** der Formhohlraum (10) durch Wände (25) begrenzt ist, die, wenn das Gemisch eingeführt wird, die Einlassöffnung (13) für das Gemisch und Gaseinlass- und/oder - auslassöffnungen aufweisen, wobei die Gaseinlass- und/oder - auslassöffnungen und die Einlassöffnung (13) in mindestens drei verschiedenen Zonen (I, II, III, IV) angeordnet sind, die über Durchflussbegrenzungsmittel mit den Mitteln (27) zum Erzeugen des Gasflusses verbunden sind.

27. Einrichtung nach Anspruch 26, **dadurch gekennzeichnet, dass** Mittel (27) zum Erzeugen des Gasflusses eine Gaspumpeneinheit umfassen, insbesondere ein Gebläse, das einen Gaseinlass und einen Gassauslass besitzt, wobei die Mittel (27) zum Erzeugen des Gasflusses des weiteren für jede der verschiedenen Zonen (I, II, III, IV) eine Ansaugleitung für die Verbindung der Zone mit dem Gaseinlass der Gaspumpeneinheit (27), eine Gebläseleitung für die Verbindung der Zone mit dem Gasauslass der Gaspumpeneinheit (27) und Kontrollmittel I_{a-c}, II_{a-c}, III_{a-c}, IV_{a-c}, V_{a-c}, VI_{a-c}) umfassen, die den Gasfluss für jede der verschiedenen Zonen in den Ansaug- und Gebläseleitungen kontrollieren.

28. Einrichtung nach einem der Ansprüche 19 bis 27, **dadurch gekennzeichnet, dass** der Formhohlraum (10) durch die Einlassöffnung (13) und mittels Wänden (25) begrenzt ist, die eine durchschnittliche Luftdurchlässigkeit aufweisen, die höher oder gleich der Luftdurchlässigkeit einer Metallplatte mit einer Dicke von 1 mm ist, und die zylindrische Perforationen mit einem Durchmesser von 1 mm aufweisen, die 4 bis 60%, vorzugsweise 8 bis 40% und am Bevorzugtesten 12 bis 30% der Oberfläche der Metallplatte abdecken.

## Revendications

1. Procédé de production d'un article en mousse moulée et agglomérée (1) comprenant les étapes :
- de fourniture de particules, comprenant des particules de mousse, pour produire l'article en mousse moulée et agglomérée (1),
- d'application d'un liant sur les particules pour obtenir un mélange,
- d'introduction d'une quantité de ce mélange dans une cavité (10) d'un moule (14), au travers d'au moins une ouverture d'entrée (13) dans ce moule (14), tout en produisant un courant de gaz à travers la cavité de moule (10),
- de fermeture de l'ouverture d'entrée (13) lorsque le mélange a été introduit dans la cavité du moule (10),
- de laisser cuire ledit liant avec les particules dans un état comprimé pour former l'article en mousse moulée et agglomérée (1), et
- de démoulage de l'article en mousse moulée et agglomérée (1) produit,
**caractérisé en ce que**
le courant de gaz à travers la cavité du moule (10) est contrôlé lors de l'introduction du mélange dans la cavité du moule (10) pour atteindre, pendant une période de temps prédéterminée, un débit minimum, exprimé en normal m³ de gaz par minute, d'au moins 500 fois, de préférence d'au moins 1.000 fois et plus préférentiellement d'au moins 2.000 fois, le volume interne V, exprimé en m³, que la cavité du moule (10) présente lorsque l'ouverture d'entrée (13) est fermée, en vue de comprimer le mélange de façon qu'il soit dans un premier état comprimé lors de la fermeture de l'ouverture d'entrée (13).

2. Procédé suivant la revendication 1, **caractérisé en ce que** le courant de gaz à travers la cavité du moule (10) est contrôlé lors de l'introduction du mélange dans la cavité du moule (10) d'une manière telle que, lorsque toutes les particules sont introduites dans la cavité du moule (10), ledit débit minimum est encore obtenu.

3. Procédé suivant l'une des revendications 1 et 2, **caractérisé en ce qu'**on fait usage d'un moule (14) dont l'ouverture d'entrée (13) présente, mesurée suivant un plan parallèle à l'ouverture d'entrée (13), une superficie prédéterminée et dont la cavité du moule (10) présente, mesurée parallèlement audit plan, une superficie en section transversale comprise entre une valeur minimum et une valeur maximum, la superficie prédéterminée de l'ouverture d'entrée (13) étant au moins égale à 30%, de préférence à 45%, et plus préférentiellement à 60%, de la superficie en section transversale maximum susdite.

4. Procédé suivant l'une quelconque des revendications 1 à 3, **caractérisé en ce qu'**on fait usage d'un moule (14) dont l'ouverture d'entrée (13) présente, mesurée dans un plan parallèle à l'ouverture d'entrée (13), une superficie prédéterminée, le mélange étant introduit dans la cavité du moulé (10) en au moins un courant présentant, mesurée également suivant ledit plan, une superficie en section transversale qui est plus petite que la superficie prédéterminée susdite de l'ouverture d'entrée (13) et **en ce que**, lors de l'introduction du mélange dans la cavité du moule (10), ledit courant de gaz est dirigé pour entrer dans la cavité du moule au moins partiellement à travers la zone de l'ouverture d'entrée (13) proche du courant de mélange.

5. Procédé suivant l'une quelconque des revendications 1 à 4, **caractérisé en ce que**, lorsque le mélange a été introduit dans la cavité de moule (10), la formation du courant de gaz à travers la cavité du moule (10) est poursuivie sensiblement jusqu'à ce que l'ouverture d'entrée (13) soit fermée, l'écoulement de gaz à travers la cavité du moule (10) étant contrôlé à la fois lors de l'introduction du mélange dans la cavité du moule (10) et après avoir introduit le mélange dedans de façon que le mélange soit comprimé par le courant de gaz et soit dans ledit premier état comprimé lors de la fermeture de l'ouverture d'entrée (13).

6. Procédé suivant l'une quelconque des revendications 1 à 5, **caractérisé en ce que** le courant de gaz à travers la cavité du moule (10) est contrôlé d'une manière telle que, lors de l'introduction dans la cavité du moule (10), les particules sont directement déposées sur la surface interne du moule et/ou l'une sur l'autre, sensiblement sans circulation dans la cavité du moule (10).

7. Procédé suivant l'une quelconque des revendications 1 à 6, **caractérisé en ce que**, pour produire un article en mousse moulée et agglomérée (1) présentant une superficie prédéterminée, on fait usage d'un moule (14), dont l'ouverture d'entrée (13) présente une superficie mesurée suivant un plan parallèle à l'ouverture d'entrée (13), qui comprend au moins 3%, de préférence au moins 5%, et plus préférentiellement au moins 8%, de la superficie de l'article en mousse moulée et agglomérée (1).

8. Procédé suivant l'une quelconque des revendications 1 à 7, **caractérisé en ce que** le mélange de particules et de liant à introduire dans la cavité du moule (10) présente une densité apparente de d kg/m³ et présente, audit premier état comprimé, une densité moyenne d'au moins 1,5 x d kg/m³ et, de préférence, d'au moins 2,0 x d kg/m³.

9. Procédé suivant l'une quelconque des revendications 1 à 8, **caractérisé en ce que** l'ouverture d'entrée (13) est prévue dans un côté supérieur de la cavité du moule (10) de façon que le mélange soit introduit dedans au moins partiellement par gravité.

10. Procédé suivant l'une quelconque des revendications 1 à 9, **caractérisé en ce que** ledit mélange est introduit dans la cavité du moule (10) dans au moins un courant, dont la direction, position et/ou forme est contrôlée lors de l'introduction du mélange dans la cavité du moule (10) pour diriger le mélange à l'intérieur de la cavité du moule (10).

11. Procédé suivant l'une quelconque des revendications 1 à 10, **caractérisé en ce que** ledit courant de gaz est au moins partiellement formé par aspiration de gaz hors de la cavité du moule (10).

12. Procédé suivant la revendication 11, **caractérisé en ce qu'**au moins 50%, de préférence au moins 80%, et plus préférentiellement sensiblement 100%, dudit courant de gaz sont aspirés en dehors de la cavité de moule (10).

13. Procédé suivant l'une ou l'autre des revendications 11 et 12, **caractérisé en ce qu'**au moins 50%, de préférence au moins 70%, et plus préférentiellement au moins 90%, dudit courant de gaz pénètrent dans la cavité de moule (10) à une pression atmosphérique ou à une pression inférieure à la pression atmosphérique.

14. Procédé suivant l'une quelconque des revendications 1 à 13, **caractérisé en ce que**, après avoir introduit le mélange dans la cavité de moule (10), l'ouverture d'entrée (13) est fermée au moyen d'un couvercle perforé et/ou perméable aux gaz (26).

15. Procédé suivant l'une quelconque des revendications 1 à 14, **caractérisé en ce qu'**on fait usage d'un moule (14), dont la cavité de moule (10) est délimitée, lors de l'introduction du mélange à l'intérieur, par des parois (25) qui montrent ladite ouverture d'entrée (13) pour le mélange et qui sont, en outre, pourvues d'orifices d'entrée et/ou de sortie de gaz pour former ledit courant de gaz à travers la cavité du moule (10), les orifices d'entrée et/ou de sortie de gaz et ladite ouverture d'entrée (13) étant agencés dans au moins trois zones différentes (I, II, III, IV) où le courant de gaz est contrôlé par lesdits orifices et/ou ladite ouverture d'entrée (13) lors de l'introduction du mélange dans la cavité de moule (10).

16. Procédé suivant l'une quelconque des revendications 1 à 15, **caractérisé en ce que**, après avoir fermé l'ouverture d'entrée (13), un courant de gaz supplémentaire est formé à travers le moule fermé (14) dans un sens différent du sens dudit courant de gaz lors de l'introduction du mélange dans la cavité du moule (10), pour modifier la distribution de densité du mélange, l'ouverture d'entrée (13) étant de préférence fermée au moyen d'un couvercle perforé et/ou perméable aux gaz (26) et le courant de gaz supplémentaire étant, de préférence, au moins partiellement guidé à travers ce couvercle (26).

17. Procédé suivant l'une quelconque des revendications 1 à 16, **caractérisé en ce que** lesdites particules de mousse comprennent des particules de mousse flexibles présentant, en particulier, une dureté à la compression, mesurée conformément au standard DIN 5377, inférieure à 15 kPa, et plus particulièrement inférieure à 10 kPa, les particules de mousse flexibles constituant, en particulier, au moins 30% en volume, et plus particulièrement au moins 50% en volume, desdites particules.

18. Procédé suivant l'une quelconque des revendications 1 à 17, **caractérisé en ce que** lesdites particules comprennent au moins 50% en volume, de préférence au moins 75% en volume, de particules de mousse à cellules ouvertes qui comportent une teneur en cellules ouvertes d'au moins 50%.

19. Installation de production d'articles en mousse moulée et agglomérée (1) à partir de particules, comprenant des particules de mousse, cette installation comprenant un dispositif (4, 7) pour appliquer un liant sur les particules en vue de produire un mélange de particules et de liant, un moule (14) montrant une cavité de moule (10) ayant une ouverture d'entrée (13) et étant agencé pour mouler lesdits articles (1) à l'intérieur, des moyens (8, 9) pour introduire une quantité dudit mélange à travers ladite ouverture d'entrée (13) dans la cavité de moule (10), des moyens (27) pour former un courant de gaz à travers la cavité du moule (10) lorsque le mélange est en train d'être introduit à l'intérieur, et les moyens (26) pour fermer l'ouverture d'entrée (13) lorsque le mélange a été introduit dans la cavité de moule (10), **caractérisée en ce que** lesdits moyens de formation de courant de gaz (27) sont agencés pour engendrer un courant de gaz à travers la cavité de moule (10) qui atteint, pendant une période de temps prédéterminée lorsque le mélange est en train d'être introduit dans la cavité de moule (10), un débit minimum, exprimé en normal m³ de gaz par minute, d'au moins 500 fois, de préférence d'au moins 1.000 fois, et plus préférentiellement d'au moins 2.000 fois, le volume interne V, exprimé en m³, que présente la cavité de moule (10) lorsque l'ouverture d'entrée (13) est fermée.

20. Installation suivant la revendication 19, **caractérisée en ce que** l'ouverture d'entrée (13) dans la cavité de moule (10) présente, mesurée suivant un plan parallèle à l'ouverture d'entrée (13), une superficie prédéterminée et **en ce que** la cavité de moule (10) présente, mesurée parallèlement audit plan, une superficie en section transversale comprise entre une valeur minimale et une valeur maximale, la superficie prédéterminée de l'ouverture d'entrée (13) étant au moins égale à 30%, de préférence à 45%, et plus préférentiellement à 60%, de la superficie en section transversale maximale susdite.

21. Installation suivant l'une des revendications 19 et 20, **caractérisée en ce que** lesdits moyens de formation de courant de gaz (27) comprennent un dispositif d'aspiration (27) agencé pour aspirer au moins 50%, de préférence au moins 80%, et plus préférentiellement sensiblement 100%, du courant de gaz hors de la cavité du moule (10).

22. Installation suivant l'une quelconque des revendications 19 à 21, **caractérisée en ce que** la cavité du moule (10) est agencée pour produire un article en mousse moulée et agglomérée (1) présentant une superficie prédéterminée, l'ouverture d'entrée (13) dans la cavité du moule (10) présentant, mesurée suivant un plan parallèle à l'ouverture d'entrée (13), une superficie comprenant au moins 3%, de préférence au moins 5%, et plus préférentiellement au moins 8%, de la superficie de l'article en mousse moulée et agglomérée (1).

23. Installation suivant l'une quelconque des revendications 19 à 22, **caractérisée en ce que** l'ouverture d'entrée (13) est prévue dans un côté supérieur de la cavité du moule (10).

24. Installation suivant l'une quelconque des revendications 19 à 23, **caractérisée en ce que** l'ouverture d'entrée (13) dans la cavité du moule (10) présente, mesurée suivant un plan parallèle à l'ouverture d'entrée (13), une superficie prédéterminée et **en ce que** les moyens (8, 9) d'introduction du mélange à travers cette ouverture d'entrée (13) dans la cavité de moule (10) sont agencés pour introduire le mélange en au moins un courant ayant une superficie en section transversale , mesurée également suivant ledit plan, inférieure à ladite superficie prédéterminée.

25. Installation suivant l'une quelconque des revendications 19 à 24, **caractérisée en ce que** les moyens (8, 9) pour introduire le mélange dans la cavité du moule (10) sont agencés pour introduire le mélange en au moins un courant à travers l'ouverture d'entrée (13) de la cavité du moule (10) et **en ce que** l'installation comprend, en outre, des moyens (11) pour modifier la direction, position et/ou forme de ce courant lorsque le mélange est en train d'être introduit dans la cavité du moule (10).

26. Installation suivant l'une quelconque des revendications 19 à 25, **caractérisée en ce que** la cavité du moule (10) est délimitée par des parois (25) qui montrent, lorsque le mélange est en train d'être introduit dedans, ladite ouverture d'entrée (13) pour le mélange et des orifices d'entrée et/ou de sortie de gaz, les orifices d'entrée et/ou de sortie de gaz et ladite ouverture d'entrée (13) étant agencés dans au moins trois zones différentes (I, II, III, IV) reliées, via des moyens de contrôle de débit, audits moyens de formation de courant de gaz (27).

27. Installation suivant la revendication 26, **caractérisée en ce que** lesdits moyens de formation de courant de gaz (27) comprennent une unité de pompage de gaz, en particulier une soufflante, présentant une entrée de gaz et une sortie de gaz, les moyens de formation de courant de gaz (27) comprenant, en outre, pour chacune desdites différentes zones (I, II, III, IV) un conduit d'aspiration pour relier la zone à l'entrée de gaz de l'unité de pompage de gaz (27), un conduit de soufflage pour relier la zone à la sortie de gaz de l'unité de pompage de gaz (27), et des moyens de commande (I_{a-c}, II_{a-c}, III_{a-c}, IV_{a-c}, V_{a-c}, VI_{a-c}) commandant l'écoulement de gaz pour chacune desdites différentes zones dans lesdits conduits d'aspiration et de soufflage.

28. Installation suivant l'une quelconque des revendications 19 à 27, **caractérisée en ce que** la cavité de moule (10) est délimitée par ladite ouverture d'entrée (13) et au moyen de parois (25) montrant une perméabilité à l'air moyenne supérieure ou égale à la perméabilité à l'air d'une plaque métallique ayant une épaisseur de 1 mm et présentant des perforations cylindriques ayant un diamètre de 1 mm qui couvrent 4 à 60%, de préférence 8 à 40%, et plus préférentiellement 12 à 30%, de la surface de la plaque métallique.
